# EUROPEAN PATENT SPECIFICATION

(11) **EP 3 277 568 B1**
(45) Date of publication and mention of the grant of the patent: **11.09.2019**
(21) Application number: 15887362.0
(22) Date of filing: 31.03.2015
(51) Int. Cl.: B62J 37/00

(54) **CANISTER MOUNTING STRUCTURE FOR A MOTORCYCLE**
KANISTERMONTAGESTRUKTUR FÜR EIN MOTORRAD
STRUCTURE DE MONTAGE DE RÉSERVOIR DE VAPEURS POUR UNE MOTO

(43) Date of publication of application: 07.02.2018
(73) Proprietor: Honda Motor Co., Ltd., Tokyo 107-8556 (JP)
(72) Inventor: TAHARA, Shuji, Bangkok 10520 (TH)
(74) Representative: Kiwit, Benedikt
(86) International application number: PCT/IB2015/000418
(87) International publication number: WO 2016/156893

(56) References cited:
- EP-A1- 2 607 677
- WO-A1-2014/208177
- JP-A- S5 667 678
- JP-A- 2010 236 395
- JP-A- 2012 159 023

## Description

### TECHNICAL FIELD

Aspects of the present disclosure relate to an evaporative emissions canister mounting structure for saddle or straddle type vehicles such as a motorcycle. The canister mounting structure includes or is a fuel tray having a fuel tray portion and a canister mounting portion integrally extending from the fuel tray portion. A canister can be secured to the canister mounting portion by way of a rubber holder and an upper canister holder that is attachable to the canister mounting portion.

### BACKGROUND ART

A modern motorcycle typically includes an evaporative emissions control system coupled between the motorcycle's fuel tank and engine.

EP 2 607 677 A1, which is considered to be the closest prior art according to the preamble of claim 1, discloses a canister arrangement structure of a motorcycle with a fuel tank and a canister that adsorbs fuel gas generated in the fuel tank.

US Patent No. 8,276,944 describes a structure by which an evaporative emissions control canister is mounted above a fuel tank of a motorcycle by way of (a) a large metal stay that is welded to the motorcycle's right and left center frame members, and which extends therebetween for supporting the canister; and (b) large right and left rubber engagement members, each of which circumferentially surrounds the canister, and engages with a corresponding lock tab projecting from the metal stay for securing the canister in positon. Also, in the above prior art, the purge control valve is mounted to a separate metal stay that is affixed to a cross pipe of the motorcycle frame by way of bolts.

### DISCLOSURE

### Technical Problem

In the prior art , the canister mounting structure only discloses mounting of the canister to the motorcycle frame, which requires a large metal stay and large rubber elements, which are a costly parts. Moreover, the large metal stay is welded to portions the motorcycle's frame, which is a costly manufacturing procedure. Also, in the prior art, the purge control valve is mounted to the motorcycle by way of an additional metal stay that is bolted to the cross pipe, which again increases parts and assembly cost, as well as parts count.

Furthermore, the prior art is time consuming to assemble and disassemble because first the purge control valve must be removed, and second the canister must be removed along with some hoses when the fuel tank is accessed. Accordingly, as the fuel tank resides below the canister mounting structure, difficulty in disassembling the canister mounting structure results in difficulty in accessing the fuel tank for maintenance purposes.

### Technical Solution

This invention according to claim 1 is a canister mounting structure for a motorcycle by which canister components including an evaporative emissions canister and a canister connecting tube are mounted to a motorcycle having a fuel tank and a fuel tray comprising a tray portion mounted above said fuel tank, characterized in that: said fuel tray further comprises a canister mounting portion on which said canister is secured.

This invention further defines that said canister mounting structure further comprises: a rubber holder wound about said canister, and said canister mounting portion includes a pair of hook members integrally formed therewith and projecting upwardly therefrom, wherein said pair of hook members engages with said rubber holder when said canister is mounted on said fuel tray.

This invention further defines that said canister mounting structure includes: an upper canister holder that attaches to said canister mounting portion of said fuel tray, and wherein said upper canister holder and said canister mounting portion securely clip said rubber holder to thereby support said canister on said canister mounting portion of said fuel tray.

This invention according to claim 2 has, a characteristic in that said upper canister holder comprises: a pair of holes formed to pass and engage with said hook members therethrough when said upper canister holder is attached to said mounting portion; and a purge control valve mounting portion by which a purge control valve is mounted to said upper canister holder between said pair of holes.

This invention according to claim 3 has, a characteristic in that: a tray portion of said fuel tray surrounds a fuel tank cap, and said canister mounting portion extends rearward from said tray portion.

This invention according to claim 4 has, a characteristic in that it further comprises a lock mechanism for locking and opening a fuel lid of the motorcycle, and said fuel tray includes a covering portion formed at a front portion of said tray portion, wherein said covering portion covers at least side and lower portions of said lock mechanism.

This invention according to claim 5 has, a characteristic in that said connecting tube comprises: a canister charge tube routed on right and left sides of said fuel tank, and said fuel tray further comprises: a clip portion integrally formed around said tray portion, which clips said canister charge tube at least generally close to right and left sides of said fuel tank; and a guide portion for guiding said canister purge tube at the portion where said canister purge tube is extending to right and left direction of said fuel tray.

This invention according to claim 6 has, a characteristic in that said guide portion comprises: a first guide portion disposed between said lock mechanism and a fuel cap of said fuel tank; and a second guide portion disposed between said fuel cap and said canister.

This invention according to claim 7 has, a characteristic in that said fuel tank includes: a basement mounted around a fuel filler pipe, and said fuel tray includes a hooking structure configured for securing said fuel tray to said fuel tank by engagement of said hooking structure with said basement, wherein said hooking structure comprises: a hooking portion formed forward of said fuel filler pipe and hanging to said basement; and an abutment portion positioned opposite said hooking portion and against which said basement abuts, wherein said hooking structure is designed at almost the same position of said first guide portion and second guide portion.

This invention according to claim 8 has, a characteristic in that said canister mounting portion includes: a hang portion formed at the rear end of thereof opposite said tray portion of said fuel tray, wherein said hang portion is secured to a body frame extending below a luggage box by hanging, and wherein said hang portion and said upper canister holder are bound together by a pin portion of said luggage box.

This invention according to claim 9 has, a characteristic in that said hang portion includes a first binding hole, and said upper canister holder includes a second binding hole formed at an identical position as said first binding hole for alignment therewith, and wherein said pin portion of said luggage box includes a pin structure inserted into said first and second holes together.

This invention according to claim 10 has, a characteristic in that said fuel tray includes: a set of stopper portions formed on an underside of said canister mounting portion and projecting toward a fixing means by which a fuel pump is fixed in position in the fuel tank.

### Advantageous Effects

According to the invention disclosed in claim 1, the canister is integrally mounted with the fuel tray, which eliminates the need to use a large metal stay in association with a pair of large rubber engagement members to mount the canister to the motorcycle, thereby reducing parts count and manufacturing cost. Also, the integral mounting of the canister with the fuel tray makes the canister mounting structure easier and more convenient to assemble and disassemble. The canister mounting structure can carry particular canister components mounted thereto as a sub-assembly, making motorcycle manufacture more convenient and less time consuming. When the fuel tray is removed from the motorcycle, thus also removing the canister from the motorcycle, rapid direct access to the fuel tank is possible, such that maintenance staff and customers can quickly and easily undertake maintenance activities.

According to the invention disclosed in claim 1, because the hook members are integrally formed on the fuel tray, it is not necessary to form hook members on the motorcycle's frame or fuel tank. Additionally, the canister is better supported in a floating manner on the fuel tray as a result of the engagement of the hook members with the rubber holder.

According to the invention disclosed in claim 1, because the upper canister holder together with the rubber holder each support the canister with the hook members, the canister is strongly held in place on the mounting portion of the fuel tray, and it's possible to minimize the size of the rubber holder.

According to the invention disclosed in claim 2, because the upper canister holder has a pair of holes through which the hook members pass and engage, the upper canister holder can closely hold and/or contact the canister. Additionally, the upper canister holder's structure makes it possible to mount a purge control valve above the upper canister holder within a certain height or vertical clearance.

According to the invention disclosed in claim 3, because the canister is mounted on the canister mounting portion and is separated a small distance from tray portion, the tray portion can conveniently provide sufficient space for easily pouring fuel into the fuel tank.

According to the invention disclosed in claim 4, because the fuel tray integrally forms the covering portion, a special cover for the lock mechanism is not necessary, thus decreasing parts count, simplifying design details, and lowering cost.

According to the invention disclosed in claim 5, because the canister charge tube is clipped and guided by the clip and guide portions of the fuel tray, respectively, no need exists for usage of a special molded tube or additional special clip & guide parts for routing the canister charge tube, thereby reducing manufacturing cost.

According to the invention disclosed in claim 6, the first and second guide portions are formed in what would otherwise be dead space, thus increasing space utilization efficiency. Additionally, even when the canister charge tube is longer, the canister charge tube remains stable as a result of the first and second guide portions.

According to the invention of claim 7, the fuel tray's hooking structure is structurally simple, formed as a hook element and an abutment element, it makes the fuel tray easy to install and remove. Also, the guide portion and the hooking structure are positioned close to each other, such that guide and hook structures can be mutually utilized in common with respect to their shape and design.

According to the invention of claim 8, the fuel tray is secured by way of the hooking structure at the fuel cap portion, as well as hanging and binding structure to the motorcycle's cross pipe at a position opposite to the fuel cap. This results in a very simple structure and decreases the number of parts by which the fuel tray can be quickly installed and removed.

Furthermore, the canister is mounted at a center point of a front securing portion and a rear securing portion of the canister mounting structure, aiding vibration isolation of the canister.

According to the invention of claim 9, the holes and a pin structure position the fuel tray in a lateral or side-to-side direction, providing a simple positioning mechanism and decreasing the number of fastening elements required for positioning the fuel tray.

According to the invention of claim 10, the stopper portions provide appropriate clearance in a downward direction, and do not affect the positioning of other components inside the motorcycle with respect to the movement of the fuel tray by vibration.

### Brief Description of the Drawings

FIG. 1 is a left side view of a motorcycle having a canister mounting structure in accordance with an embodiment of the present disclosure.
FIGs. 2A and 2B are a left side views of a canister mounting structure in accordance with embodiments of the present disclosure
FIG. 3 is a top view of a canister mounting structure in accordance with an embodiment of the present disclosure.
FIGs. 4A and 4B are cross sectional views of canister mounting structures in accordance with embodiments of the present disclosure, taken through section line A - A corresponding to FIG. 3.
FIGs. 5A and 5B are right side views of a canister mounting structure in accordance with embodiments of the present disclosure.
FIG. 6 is a top view of a canister mounting structure installed above a fuel tank in accordance with an embodiment of the present disclosure.
FIGs. 7A and 7B are bottom views of a canister mounting structure in accordance with embodiments of the present disclosure.
FIG. 8 is an exploded view of a canister mounting structure in accordance with an embodiment of the present disclosure.
FIG. 9 is a rear view of a canister mounting structure and a fuel lid lock mechanism carried thereby in accordance with an embodiment of the present disclosure.
FIG. 10 is a left perspective view of the canister mounting structure and the fuel lid lock mechanism carried thereby in accordance with an embodiment of the present disclosure.

### Detailed Description of Example Embodiments

For purposes of brevity and clarity, descriptions of representative embodiments of an evaporative emissions canister mounting structure for a motorcycle in accordance with particular embodiments of the present disclosure are provided hereafter. For purpose of brevity and clarity, in the description that follows the evaporative emissions canister mounting structure is simply referred to as a canister mounting structure, and an evaporative emissions canister is simply referred to as a canister.

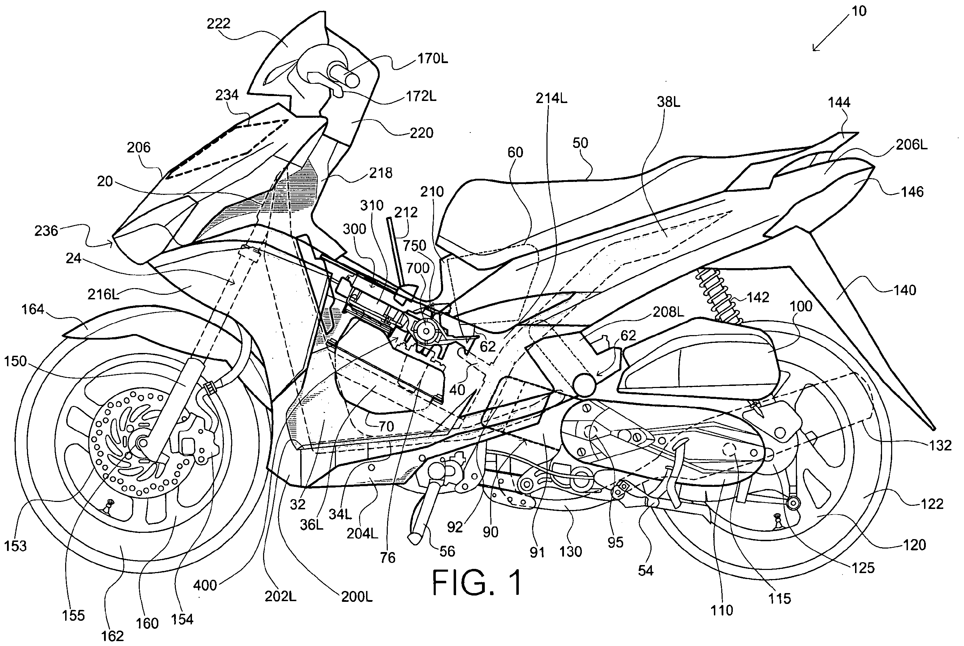

With reference to FIG. 1, in various embodiments a motorcycle 10 a canister mounting structure 300 in accordance with an embodiment of the present disclosure is or exhibits structural elements / features corresponding to a scooter, underbone, or similar type of saddle / straddle type vehicle, in a manner readily understood by an individual having ordinary skill in the relevant art. However, an individual having ordinary skill in the relevant art will further recognize that a canister mounting structure 300 in accordance with an embodiment of the present disclosure is not limited to such types of motorcycles 10. The canister mounting structure 300 includes or is a fuel tray structure or fuel tray for the motorcycle 10, as further described in detail below.

In the embodiment shown in FIG. 1, the motorcycle 10 includes an underlying structural frame that includes a down tube or front frame pipe 32; a pair of lower frame pipe 34L,R (not shown); a pair of lower cross pipes 36L,R(not shown); a pair of rear frame pipes 38L,R(not shown); and a cross pipe 40. The front frame pipe 32 connects to a steering head pipe 20 and extends downwardly therefrom at a slight rearward angle. Finally, the cross pipe 40 extends between the left and right rear frame pipes 38L,R to thereby couple them together.

The motorcycle 10 further includes a seat 50 on which a rider and a passenger can sit, and a luggage box 60 disposed below the seat 50. An engine unit 90 is swingably mounted to the motorcycle's frame, and resides below the luggage box 60. A fuel tank 70 for carrying a fuel supply is disposed between both lower cross pipes 36L,R and mounted thereon forward of the engine unit 90. As further detailed below, a canister mounting structure 300 includes a fuel tray 310 that includes a fuel tray portion 320 disposed above the fuel tank 70, as well as a canister mounting portion 400 extending away from the fuel tray portion 320 (e.g., the canister mounting portion 400 is integrally formed with the fuel tray portion 320, and projects rearward therefrom). The canister mounting portion 400 extends to and hangs onto the motorcycle's cross pipe 40, and interfaces with a downwardly projecting pin portion 62 of the luggage box 60, as also detailed below. The canister mounting portion 400 carries an elongate cylindrical canister 700 and a purge control valve 750 by which evaporated fuel vapor within the fuel tank 70 is captured and routed into the engine unit 90.

An engine unit 90 comprises a cylinder head 92 and cylinder block 91, wherein a combustion chamber is formed. A propulsion or driving force is delivered to a rear wheel 120 that carries a rear tire 122. The rear wheel 120 is supported by a rear axle 125, about which the rear wheel 120 rotates in response to the propulsion force. More particularly, the engine's propulsion force is communicated to the rear wheel 120 by way of a crank shaft that rotates about a crank shaft axis 95, and a belt converter or continuously variable transmission (CVT) 110 having a belt driven axis 115. The belt converter 110 is disposed at the left side of engine unit 90. An air cleaner 100 for filtering an air is connected to the engine unit 90 and disposed above the belt converter 110. Exhaust pipe 130 from the engine unit 90 is coupled to a muffler 132 located at right portion of the engine unit 90.

The engine unit 90 also has a main stand 54, and a side stand 56 for supporting the motorcycle 10 is equipped at the left side of motorcycle 10 when the motorcycle 10 is parked. A rear fender 140 is disposed below the seat 50 above and rearward of the rear tire 122, for intercepting road spray or debris traveling away from the rear tire 122, thereby preventing such road spray or debris from traveling beyond the rear fender 140. A rear suspension or cushion 142 is coupled between the rear frame pipe 38 and the engine unit 90, in order to absorb road vibrations when the motorcycle 10 is in motion. So, the engine unit 90 is swingably supported on the frame. The motorcycle 10 additionally includes a rear grip 144 that the passenger can grasp; a rear combination light 146 such as a combined tail light, rear winker, and license light.

With respect to frontal portions of the motorcycle 10, the steering head pipe 20 supports a pair of front forks 24. An outer front fork 150 is coupled to the front fork 24, and supports a front axle 155. The front axle 155 supports a front wheel 160 that carries a front tire 162. A front fender 164 is disposed above the front tire 162. A steering handle pipe is coupled to the front fork 24 and extends upwardly therefrom, beyond the steering head pipe 20. A pair of handle grips 170L,R are mounted to the steering handle pipe. The rider can grasp the handle grips 170L,R and pivotally rotate them about a steering axis to turn the front fork 24, the front axle 155, and the front wheel 160 left or right, thereby controlling the motorcycle's direction of travel.

The motorcycle 10 further includes a front braking mechanism, such as a front disc brake including a front brake disc or rotor 153 and a front brake caliper 154 that can selectively engage with the front brake disc 153 to apply a braking force thereto to slow down the motorcycle 10 in response to rider activation of a front brake lever 172R(not shown) disposed forward of the right hand grip 170R(not shown). A corresponding rear brake lever disposed forward of the left hand grip 170L enables selective rider activation of a rear braking mechanism.

The motorcycle 10 further includes a pair of front step floor panels 200L,R that provides a pair of step floors 202L,R for supporting the rider's feet; and a pair of lower under cover 204L,R disposed beneath the front step floor panels 200L,R. The motorcycle 10 also includes a pair of rear side covers 206L,R disposed below the seat 50; and a pair of rear step covers 208L,R disposed below the rear side covers 206L,R, from which a pair of rear passenger steps 52L,R is accessible (e.g., foldably extendible) for supporting the passenger's feet.

A center cover 210 is disposed below the seat 50 contiguous with and forward of the rear side covers 206L,R. The center cover includes an aperture formed therein forward of the seat 50, to which a pivotally openable / closeable fuel lid 212 is mounted, such that the fuel tray portion 320 is exposed when the fuel lid 212 is open. A pair of front side covers 214L,R is disposed below the center cover 210 and forward of portions of the rear side covers 206L,R.

The motorcycle 10 further includes a pair of leg shields 216L,R disposed contiguous with and forward of the front side covers 214L,R, and above frontal portions of the front step floor panels 200L,R, for protecting the rider's legs when the motorcycle 10 is ridden.

The motorcycle 10 also includes an inner cover 218 disposed contiguous with and forward of the center cover 210 and contiguous with and above the front side covers 214L,R, such that the inner cover 218 overlays particular portions of the motorcycle's structural frame that face the rider. A rear handle cover 220 extends above the inner cover 218, and a front handle cover 222 covers the steering handle pipe. The handle grips 160L,R are disposed slightly rearward of the front handle cover 222.

A front cover 230 is mounted contiguous with and forward of the inner cover 218, below and extending forward of the front handle cover 222 and above the leg shields 216L,R, substantially across the motorcycle's width. The front cover 230 exhibits a downward slope in the side view. The front cover 230 includes an opening or aperture that carries a removable front hood 234, beneath which a headlight unit 236 resides. The headlight unit 236 provides the motorcycle's right and left headlights as well as right and left winkers, in a manner understood by an individual having ordinary skill in the relevant art.

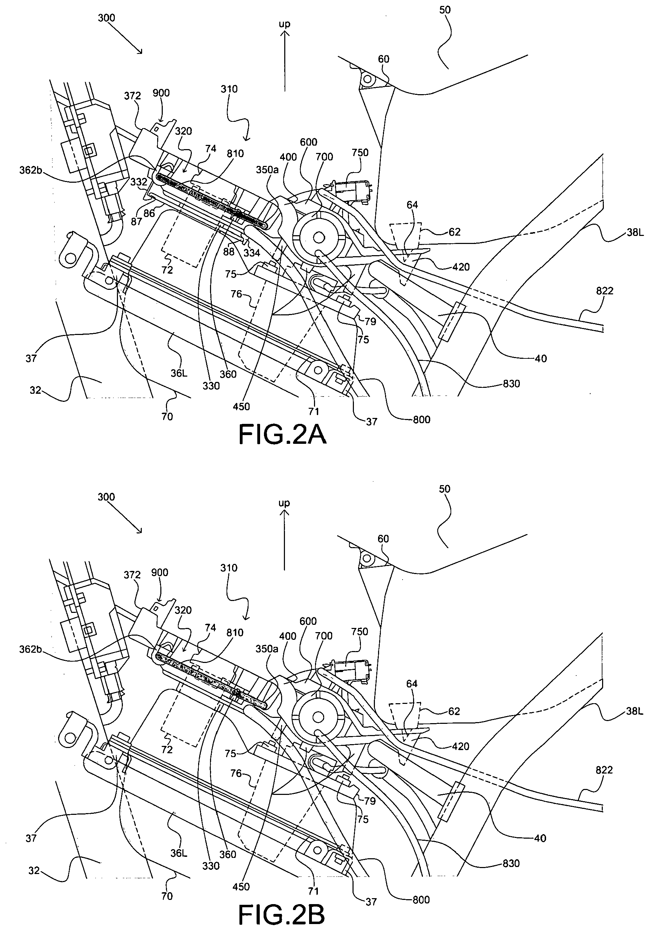

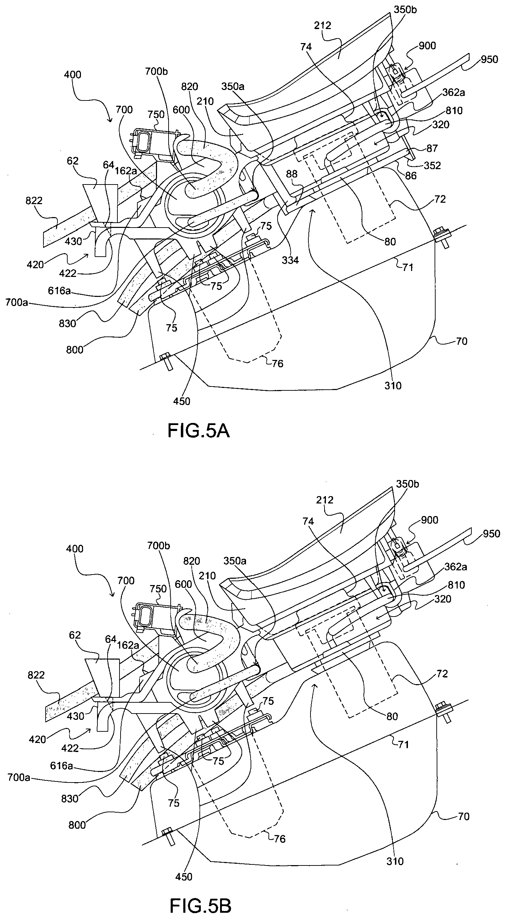

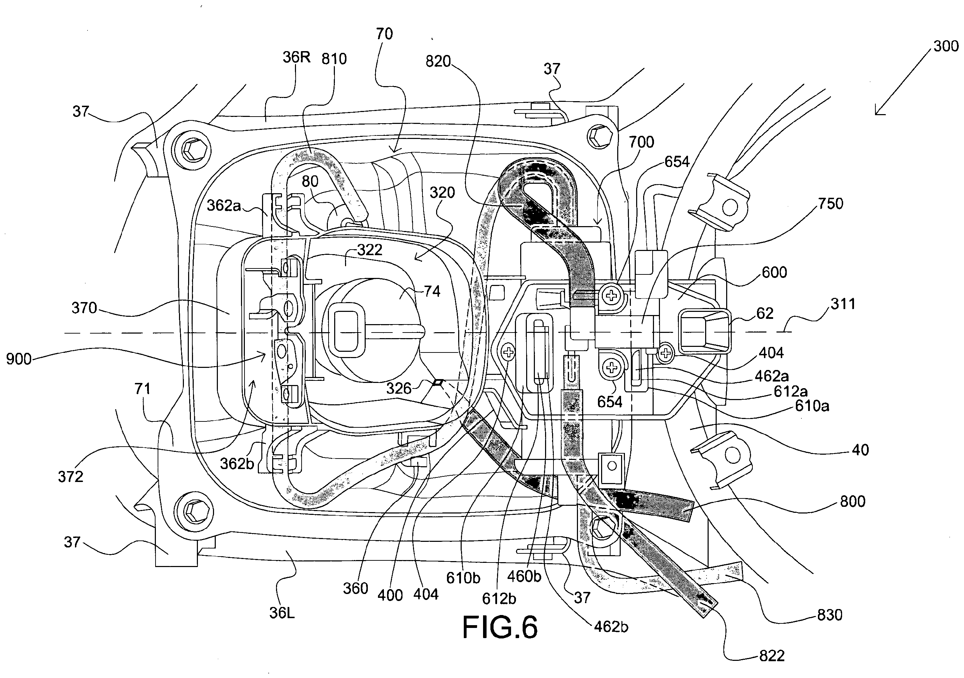

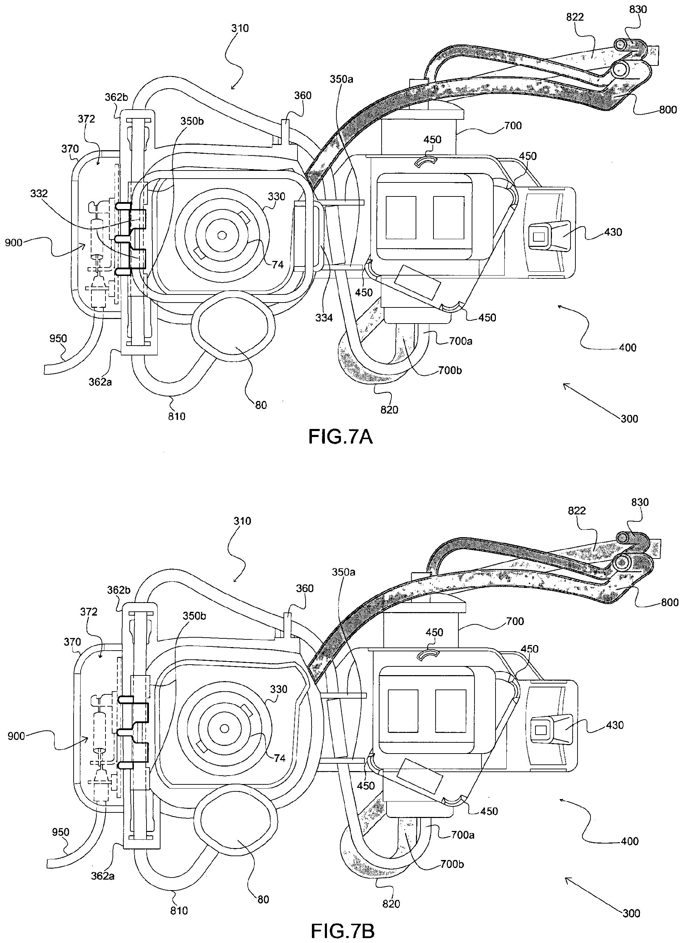

Further details of the canister mounting structure 300 and the manner in which structural elements of the canister mounting structure 300 are disposed relative to portions of the fuel tank 70, the cross pipe 40, and the luggage box 60 are described hereafter with particular reference to FIGs. 2A - 8. As shown in FIGs. 2A - 2B, the fuel tank includes a rim or flange 71 that extends outward a predetermined distance beyond the fuel tank's periphery around an approximate mid-section or upper-mid-section of the fuel tank 70. The fuel tank 70 is mounted by way of four fastening elements such as bolts that extend through apertures in corner sections of the flange 71 into metal stay structures 37 formed at the lower cross pipe 36L,R. Consequently, the fuel tank 70 resides between both of the lower cross pipes 36L,R, extending rearward of the front frame pipe 32 and terminating forward of the cross pipe 40. The fuel tank 70 is oriented such that its flange 71 is parallel or approximately parallel to the lower cross pipes 36L,R, which have a downward slope between the motorcycle's front frame pipe 32 and the rear frame pipes 38L,R. Thus, the fuel tank's flange 71 has a corresponding downward and rearward slope when the fuel tank 70 is mounted to the lower cross pipes 36L,R.

The fuel tank 70 also includes a fuel filler sleeve, tube, or pipe 72 welded thereto or integrally formed therewith, which projects upward and slightly rearward through upper forward surface of the fuel tank 70, as well as downward and forward inside the fuel tank 70. The fuel filler pipe 72 provides a conduit or channel through which fuel can be dispensed or introduced into the fuel tank 70 to thereby (re)fill the fuel tank 70 by way of a conventional fuel dispensing nozzle. A fuel cap 74 is screwably securable to and removable from a top section of the fuel filler pipe 72.

A fuel pump 76 is installed at a rearward portion of the fuel tank 70 and below the canister mounting portion 400 by way of fasteners 75 such as a set of bolts and nuts. The fuel tank 70 also includes a conventional fuel vapor separator 80 that is carried by or adjacent to the right side of the fuel tank's upper forward surface, and which is laterally right offset from the fuel filler pipe 72 because the motorcycle 10 is inclined to the left side when supported by the side stand 56, and the right side of the fuel tank 70 is higher than the left side. Usually, the fuel filler pipe 72 is set at a highest position of the fuel tank 70. Accordingly, it's better to mount the fuel vapor separator 80 at a right-offset position relative to the fuel filler pipe 72. The fuel vapor separator 80 is configured for separating fuel vapor from liquid fuel, i.e, receiving and passing fuel vapor therethrough while preventing the passage of liquid fuel therethrough. The fuel vapor separator 80 is coupled to a charge input of the canister 700 to deliver fuel vapors thereto, as further set forth below.

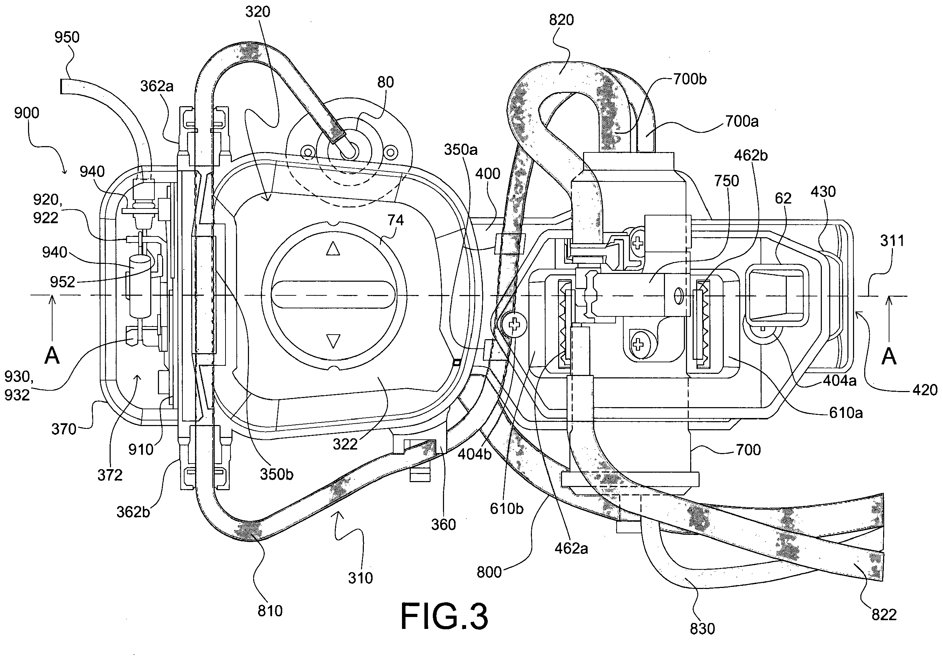

A center line 311 of the motorcycle 10 is indicated in FIG. 3. The canister mounting structure 300 is mounted to the motorcycle 10 above the fuel tank 70, such that the fuel tray portion 320 is disposed below the motorcycle's fuel lid 212, and is accessible when the fuel lid 212 is raised (e.g., during (re)filling of the fuel tank 70). The canister mounting portion 400 extends rearwardly away from the fuel tray portion 320. The canister mounting portion 400 is typically integrally formed as one unit with the fuel tray portion 320, which reduces parts count and cost.

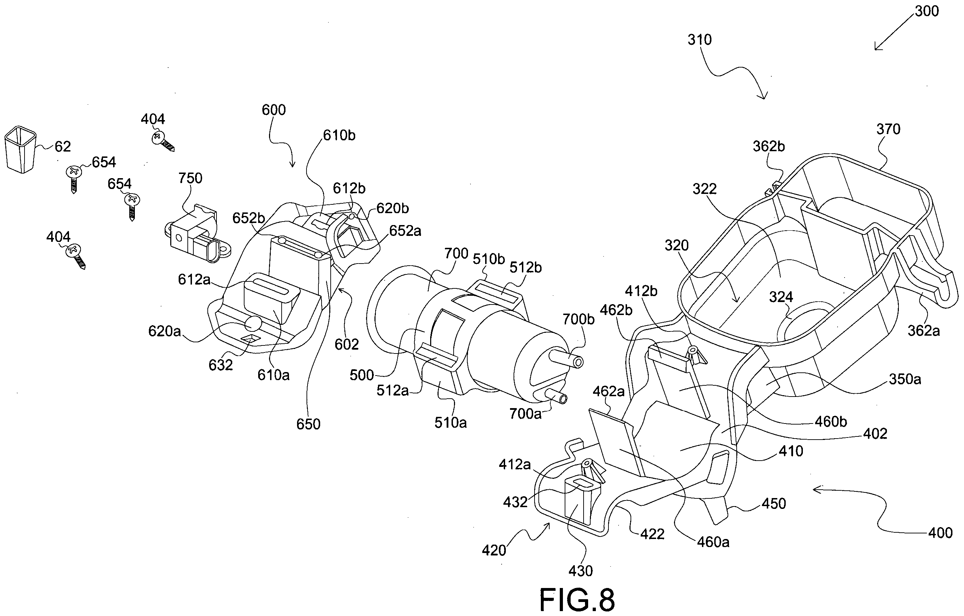

The canister mounting portion 400 includes a cradle section 410 thereon, for instance, as shown in FIG. 8, that is configured for carrying the canister 700 at a position between a rear portion or border of the fuel tray portion 320 and the cross pipe 40, above the fuel pump 76, such that the canister's elongate length laterally extends or is disposed across the cradle section 410. The canister 700 can be carried midway or approximately midway between the rear portion of the fuel tray portion 320 and the cross pipe 40, thereby aiding suitable vibration isolation of the canister 700 because the fuel tray portion 320 is secured at the fuel cap 74 and the fuel tray 310 is hanged by a hooking structure 420 at the cross pipe 40, wherein the fuel tray 310 is mounted forward and rearward of the cradle section 410. Additionally, an upper canister holder 600 is mounted above the cradle section 410, and a purge control valve 750 is further mounted on the upper canister holder 600, as detailed below. The canister mounting structure 300 and canister components carried thereby (e.g., the canister 700, and one or more connecting tubes corresponding thereto) can be preassembled as a single sub-unit to enhance the ease and speed of motorcycle manufacture.

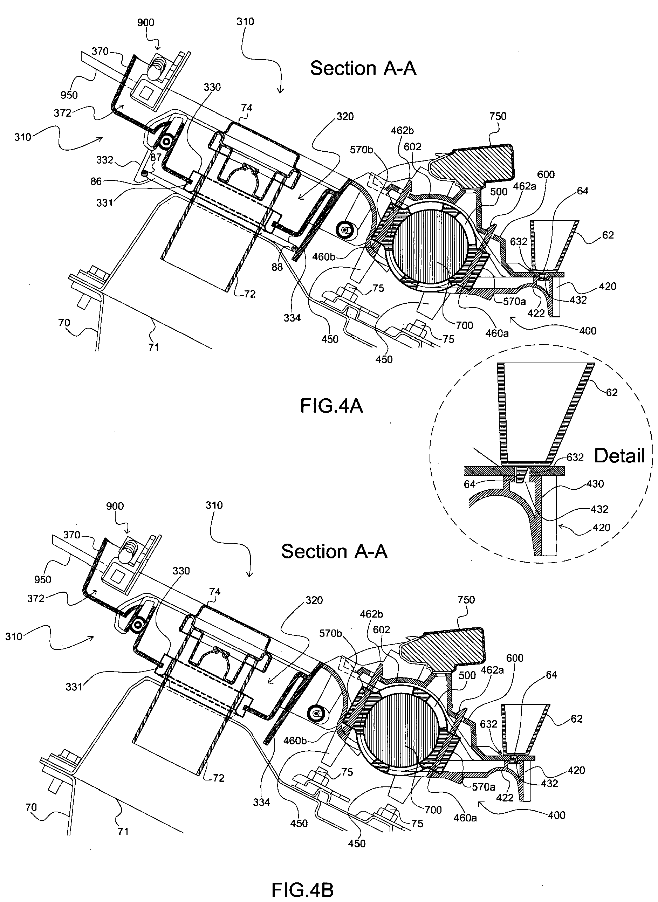

As indicated in FIG. 8, the fuel tray portion 320 includes an inner bowl or cavity, such that the cavity is surrounded by a wall in all directions. As best shown in FIG. 8, the cavity has a generally planar floor 322 with a fuel filler aperture 324 centrally or generally centrally disposed therein, through which an upper segment of the fuel filler pipe 27 can extend. As indicated in FIGs. 4A-4B, and elsewhere, a sealing ring 330 is securely attached to and circumferentially disposed between the fuel filler pipe 72 and the planar floor by fitting of a circumferential recess 332, thereby securing the fuel tray portion 310 to the fuel filler pipe 72, correspondingly securing forward portions of the canister mounting structure 300 / fuel tray portion 310 to the fuel tank 70. By adjusting the fitting force of the sealing ring 330, the front portion of the canister mounting structure 300 / fuel tray portion 310 can be securely held to the fuel tank 70 without any engaging means, such as shown in FIG. 4B and corresponding FIGs.

In addition to the foregoing, in some embodiments such as shown in FIGs. 2A, 4A, and 5A, the upper forward surface of the fuel tank 70 carries or includes a basement 86 mounted thereon or integrally formed therewith. The basement 86 is formed about a square or generally square shape by a small metal wire, and welded to the fuel tank 70 around the fuel filler pipe 72, parallel or generally parallel to the fuel tank's flange 71. In such embodiments, the fuel tray portion 320 is additionally mounted to the fuel tank's basement 86. More particularly, a rearward portion of the fuel tray portion 320 includes a downwardly projecting abutment portion 334 against which the rear edge 88 of the fuel tank's basement 86 can be positioned; and at the front lower portions of the fuel tray portion 320 includes downwardly projecting hooking portion or pair of hooking portions 332 disposed opposite the abutment portion 334, which is configured for engaging with the front edge 87 of the basement 86. By way of placing or abutting the abutment portion 334 against the rear edge 88 of the basement 86, followed by hooking or latching the hooking portion 332 to the front edge 87 of the basement 86, the canister mounting structure 300 can be securely mounted to the basement 86. The projecting pair of hooking portions 332 and the abutment portion 334 are integrally formed with the fuel tray portion 310 as plastic materials.

A bottom rear portion of the fuel tray portion 320 includes a drain opening 326 that is fluidically coupled to a fuel tray drain tube 800. As a result of the aforementioned downward and rearward slope, fuel that has been accidentally splashed or spilled into the fuel tray portion 320 during fuel tank (re)filling is routed to the drain opening 326 and into the drain tube 800, such that the fuel tray portion 320 is automatically drained.

Further to the foregoing, rearward portions of the canister mounting structure 300 are securely mounted to the motorcycle 10 by way of (a) overlaying or hanging a rear portion of the canister mounting portion 400 on the cross pipe 40, as well as (b) engaging the pin portion 62 of the luggage box 60 through rear portions of the upper canister holder 600 and the canister mounting portion 400, just above the cross pipe 40. More particularly, as indicated in FIGs. 2A-2B, 4A-B, 5A-5B, and 8, the canister mounting portion 400 includes a rearward projecting hang portion 420 with a contoured under surface 422 having a shape profile that conforms to or matches portions of the cross pipe's shape. As a result, the hang portion 420 can be stably hung over or securely mounted on the cross pipe 40, for instance, along a middle segment of the cross pipe 40, such that an outer upper surface of the cross pipe 40 engages with and supports the contoured under surface 422 of the hang portion 420. Consequently, the hang portion 420 facilitates stabilization and secure mounting of rearward portions of the canister mounting structure 300 to the motorcycle 10.

Moreover, as indicated in FIG. 8, the hang portion 420 also includes a pin receiving structure 430 having a first pin binding aperture or hole 432 therein. With additional reference to FIGs. 2A - 2B, 4A - 4B, the upper canister holder 600 includes a second pin binding aperture or hole 632. When the hang portion 420 is hung over the cross pipe 40 and the upper canister holder 600 is mounted to the canister mounting portion 400 as further detailed below, the first and second binding holes 432, 632 are aligned with each other. The pin portion 62 of the luggage box 60 includes a downwardly projecting pin structure 64. After the hang portion 420 overhangs the cross pipe 40 and the first and second binding holes 432, 632 are aligned, the luggage box 60 can be installed such that the pin structure 64 extends through the first and second binding holes 432, 632, thereby securing the hang portion 420 and the upper canister cover 600 to the pin portion 62 of the luggage box 60, which correspondingly further secures rearward portions of the canister mounting structure 300 to the motorcycle 10. Such alignment of the canister mounting portion's hang portion 420 and the upper canister holder 600 with the pin portion 62 of the luggage box 60 by way of the pin binding apertures 432, 632 and the insertion of the downwardly projecting pin structure 64 therein inherently results in lateral or side-to-side alignment of the canister mounting structure 300 (e.g., along the cross pipe 40) in a structurally simple, cost effective manner.

The canister mounting portion 400 also includes a plurality of downwardly projecting stopper portions or stoppers 450 disposed forward and downward of an opposite surface of the cradle section 410. When the canister mounting structure 300 is mounted to the motorcycle 10, the stoppers 450 are lengthwise aligned relative to axes of the fasteners 75 of the fuel pump fixing structure 79, and terminate at least slightly above such fasteners 75. The stoppers 450 are formed of the same material as the fuel tray 310 and an at least somewhat resilient material such as rubber, such that they can limit the movement of the canister mounting structure 300 / fuel tray 310 resulting from vibration and keep the fuel tray 310 at an intended location such that it does not contact other parts. Furthermore, it also prevents some fasteners 75 of the fuel pump 76, such as nuts, from falling down (e.g., during maintenance) because the distance between the stoppers 450 and fasteners is smaller than the nut thickness. Additionally, such stoppers 450 are disposed in what otherwise would be unused or dead space, thus enhancing overall space efficiency with respect to providing intended vibration isolation / dampening effects.

With respect to installation of the canister 700 on the canister mounting structure 300, the canister 700 is secured to the canister mounting structure 300 by way of (a) rubber holder 500 that is at least partially wrapped or wound around the canister 700; (b) a pair of projecting hook members 460a-b that are integrally formed with and which extend upwardly from the canister mounting portion 400, through portions of the rubber holder 500; plus (c) the upper canister holder 600 comprising apertures 612a-b as to receive the hook members 460a-b and overlays the rubber holder 500 and the underlying canister 700.. More specifically, as shown in FIG. 4A and elsewhere, the canister mounting potion 400 includes a first hook member 460a just behind the cradle section 410 (i.e., toward the hang portion 420), and a second hook member 460b just forward of the cradle section 410 (i.e., toward the fuel tray portion 310). As further indicated in FIG. 8, the first and second hook members 460a,b are generally rectangular structures. The hook members 460a-b establish upwardly projecting barriers or walls between which the cradle section 410 is disposed. Each hook member 460a,b includes a hooked or undercut tip portion 462a,b at a distal end thereof, for engaging with the upper canister holder 600.

As also indicated in FIG. 8, the rubber holder 500 includes or is a band of rubber or similar material that is wound about a middle section of the canister 700. As further shown in FIGs. 4A - 4B and 8, the rubber holder 500 includes first and second projection portions or shoulder portions 510a,b that radially extend outward away from the canister 700 on opposite surface regions in frontward and rearward directions. The first and second shoulder portions 510a,b each have an internal passage or slot 512a,b therethrough, which is configured for receiving and closely surrounding corresponding hook members 460a,b of the canister mounting portion 400. After the canister 700 has been wound by the rubber holder 500, the canister 700 can be installed onto the canister mounting portion 400 by (a) aligning the slots 512a,b of the rubber holder with the hooked tip portions 462a,b of the hook members 460a,b; and (b) displacing the rubber holder wound canister 700 toward to the cradle section 410 to thereby pass each hook member 460a,b through a slot 512a,b of a corresponding shoulder portion 510a,b, after which the rubber holder wound canister 700 is seated on the cradle section 410 of the canister mounting portion 400. After the canister 700 and the rubber holder 500 wound thereabout are seated on the cradle section 410, the canister 700 is oriented such that a central lengthwise axis therethrough (or equivalently, the canister's elongate length) is perpendicular to the motorcycle's center line 311. It should be noted that when the rubber holder wound canister 700 has been inserted onto the cradle section 410, the first and second hook members 460a,b project beyond the rubber holder's shoulder portions 510a,b such that the hooked tip portions 462a,b remain exposed above these shoulder portions 510a,b.

An individual having ordinary skill in the relevant art will recognize that the rubber holder 500, its shoulder portions 510a,b, the slots 512a,b, and the hook members 460a,b aid secure retention of the canister 700 in the cradle section 410, while also inherently providing canister vibration absorption / isolation as a result of the set of materials from which the rubber holder 500 is formed and the floating manner in which the canister 700 is held by the canister mounting structure 300. A canister mounting structure in accordance with an embodiment of the present disclosure utilizes only a single rubber holder 500, which reduces parts count and cost.

The upper canister holder 600 includes first and second receiving portions 610a,b configured for (a) receiving and overlaying the rubber holder's first and second shoulder portions 510a,b, respectively; (b) receiving the first and second hook members 460a,b therethrough, by way of first and second apertures 612a,b formed in such receiving portions 610a,b; and (c) latching engagement with the hooked tip portions 462a,b of the canister mounting portion's upwardly projecting hook members 460a,b. Thus, as will be understood from FIG. 8 and other FIGs., once the canister 700 having the rubber holder 500 wound thereabout is seated on the cradle section 410, the upper canister holder 600 can be installed onto the canister mounting portion 400 from above to thereby (i) cover at least those portions of the canister 700 around which the rubber holder 500 is wound; (ii) cover the rubber holder's shoulder portions 510a,b; and (iii) engage the hooked tip portions 462a,b with upper / exposed surface areas of the receiving portions 610a,b, effectively latching the upper canister holder 600 into position on the canister mounting portion 400. Curved portions 602 of the upper canister holder 600 can have a contour that conforms or approximately conforms to or matches the shape or curvature of the canister 700 and the rubber holder 500 wound thereabout, in a manner indicated in FIGs. 4A - 4B and 8.

The upper canister holder 600 additionally includes first and second mounting holes or apertures 620a,b formed therein, which are configured for cooperative alignment with first and second fixing points 412a,b on the canister mounting portion 400 once the upper canister holder 600 has been lowered into position on the canister mounting portion 400. Consequently, the upper canister holder 600 can be secured to the canister mounting portion 400 by way of fasteners such as screws 404, further aiding or establishing secure retention of the canister 700 to the canister mounting structure 300.

Further to the foregoing, a middle portion of the upper canister holder 600 carries an upwardly projecting purge control valve mounting portion 650 having a pair of apertures or holes 652a,b formed therein such that the purge control valve 750 can be mounted to the upper canister holder 600 by way of fasteners 654 such as screws.

After the purge control valve 750 has been mounted to the upper canister holder 600, a plurality of hoses or tubes can be connected the canister mounting structure 300 and routed relative thereto. More particularly, in various embodiments a canister charge tube 810 is connected to the fuel vapor separator 80; routed on both right and left sides of the fuel tank 70 and the fuel tray portion 310; and connected to a conventional canister charge input 700a of the canister 700. The canister mounting structure 300 includes at least two guide portions or structures, such as a rear guide portion 350a formed at a lower rear face or edge of the fuel tray portion 320; and a front guide portion 350b formed at a lower front face or edge of the fuel tray portion 320; and a plurality of clip portions 360, 362a,b that facilitate such routing of the canister charge tube 810.

The rear guide portion 350a includes two walls disposed behind the rear wall portion of the fuel tray portion 320, and extending rearward. The rear guide portion 350a is integrally formed with the fuel tray portion 310 at a surface opposite to the cradle section 410 between the fuel cap 74 and the canister 700. Each wall of the rear guide portion 350a includes a hole structure through which portions of the canister charge tube 810 pass, for instance, to establish a canister charge tube path rearward of the fuel tray portion 320 that is slightly angled relative to the fuel tray's center line 311. Accordingly, it's possible to route and guide the canister charge tube 810 by using what would otherwise be dead space between the fuel tray portion 310 and the canister mounting portion 400. The fuel tray portion 320 can also include a rear clip portion 360 that extends outward from the left rear side thereof, and which is configured for holding a portion of the canister charge tube 810 in an orientation that facilitates smooth routing of the canister charge tube 810 relative to the rear guide portion 350a and the left side of the fuel tray portion 320. The rear guide portion 350a and the rear clip portion 860 enables the canister charge tube 810 to be held close to the fuel tray portion 310 without additional clips or guide means.

The front guide- portion 350b is integrally formed between a fuel lid lock mechanism 900 (described below) and the fuel cap 74, just forward of the fuel tray portion 320. The front guide portion comprises at least one straight or generally straight structure (e.g., one or more hollow cylinders, rings, or similar structures) through which portions of the canister charge tube 810 pass, for instance, along a straight or generally straight right - left path, perpendicular to the center line 311. In several embodiments, the front guide portion 350b additionally directs the canister charge tube 810 along a slight downward slope in a direction away from the fuel vapor separator 80, thereby aiding delivery of fuel vapors to the canister 700. The canister mounting structure 300 can further include a pair of front clip portions 362a,b that extend outwardly from the fuel tray portion 320, where such front clip portions 362a,b are aligned with the front guide portion 350b. The front clip portions 362a,b clip or hold portions of the canister charge tube 810 in position such that the canister charge tube 810 is routed smoothly from one side of the fuel tray portion 310, through the front guide portion 350b, to the other side of the fuel tray portion 320.

By way of the aforementioned guide portions 350a,b and clip portions 360, 362a,b, the canister charge tube 810 is routed on both right and left sides of the fuel tank 70 and fuel tray portion 310 within the width of the fuel tank 70, such that the canister charge tube 810 is protected by the width of the fuel tank 70 and securely held proximate, close, or generally close to the fuel tank 70 and fuel tray portion 320. Such routing makes both sides of the canister charge tube 801 higher and wider expanding than the fuel tank 70, even if the motorcycle 10 is tilted to one side or the other. The guide portions 350a,b are formed in what otherwise would be unused or dead space, thereby enhancing space utilization efficiency.

A first canister purge tube 820 can be coupled to a conventional purge output 700b of the canister 700, and routed to an input of the purge control valve 750. Similarly, a second canister purge tube 822 can be coupled to an output of the purge control valve 750, and routed to the motorcycle's air intake system. Finally, a canister drain tube 830 can be coupled to a conventional canister drain output and routed away therefrom, for draining splashing liquid fuel out of and away from the canister 700.

As illustrated in multiple FIGs., in various embodiments the canister mounting structure 300 also carries or includes portions of a fuel lid locking mechanism 900 for locking and opening the motorcycle's fuel lid 212. In such embodiments, the fuel tray 310 has a covering portion 370 integrally formed therewith at its front portion, which forms a compartment 372. The covering portion 370 covers at least one side as well as lower portions of the fuel lid locking mechanism 900. The compartment 372 extends forward of a front portion of the fuel tray portion 320.

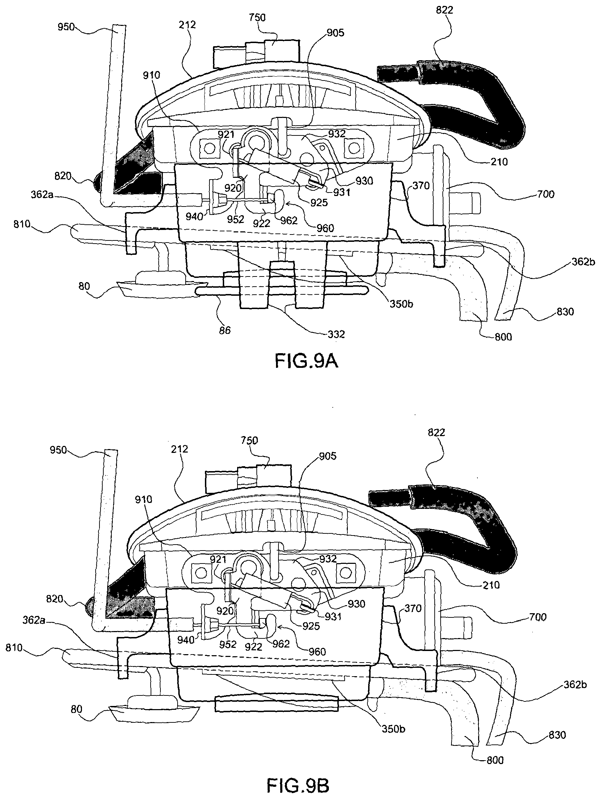

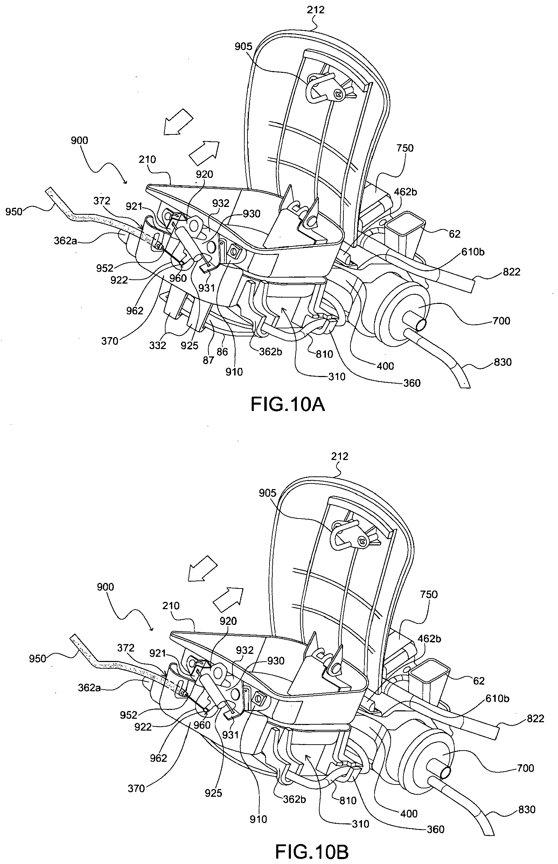

With further reference to FIGs. 9A - 9B and 10A - 10B, in various embodiments the lock mechanism 900 includes a loop member 905 carried by the fuel lid 212, and which extends downwardly therefrom; a main plate 910 mounted to a rear inner surface of the compartment 372; a first rotatable plate 920 mounted to the main plate 910; a second rotatable plate 930 mounted to the main plate 910; a coil type spring 925 coupled between the first and second plates 920, 930 by way of a first and a second spring receiver 921, 931, respectively; a bracket 940 projecting forward from the main plate 910; a pull line 950 having a wire or cable 952 slidably disposed therein; and a pull unit 960.

The pull line 950 is routed into a central and side portion of the compartment 372, such that it abuts the bracket 950. The wire 952 laterally extends beyond the bracket 940 into the compartment 372 to engage with the pull unit 960. The pull unit 960 includes a lower arm portion 922 of the first rotatable plate 920, and a wire mount 962 that secures a distal end of the wire 952 to this lower arm portion 922.

Each of the first and second plates 920, 930 are resiliently biased to remain in default positions such that an upper arm portion 932 of the second plate 930 remains engaged with the loop member 920 when the fuel lid 212 is closed. The upper arm portion 932 is biased to remain in its default position in the absence of sufficient rotational force applied thereto, such that the fuel lid 212 cannot be opened. Thus, as a result of the engagement, the fuel lid 212 is latched or locked.

A sufficient pulling force applied to the wire 952 causes rotational displacement of the first plate 920 about a first axis of rotation as a result of force transfer from the pull unit 960, thereby rotating the first plate 920 out of its default position. Rotational displacement of the first plate applies a force to the spring 925, which is transferred to the second plate 930 to thereby cause the second plate 930 to rotate out of its default position about a second axis of rotation. Such rotation of the second plate 930 displaces the second plate's upper arm portion 932 such that the upper arm portion 932 disengages from the fuel lid's loop member 905. As a result, the fuel lid 212 becomes unlocked.

When the pulling force applied to the pull line 950 is released, the first plate 920 rotates about the first axis of rotation to its default position, and the second plate 930 coupled to the first plate 920 by way of the spring 925 correspondingly rotates about the second axis of rotation to return to its default position. A downward force applied by the loop member 905 to the upper arm portion 932 of the second plate 930 as a result of fuel lid closure can rotatably displace the second plate 930 sufficiently about the second axis of rotation such that a lower portion of the loop member 905 passes below an upper border of the upper arm portion 932, after which the second plate 930 returns to its default position whereat the upper arm portion 932 once again engages with the loop member 920.

Various embodiments of the present invention described herein address at least one problem, limitation, and/or disadvantage associated with existing evaporative emissions canister mounting structures for motorcycles. While certain features and/or advantages associated with certain embodiments have been described herein, other embodiments may also exhibit such features and/or advantages, and not all embodiments need necessarily exhibit such features and/or advantages to fall within the scope of the following claims. It will be appreciated by a person of ordinary skill in the art that several of the above-disclosed structures, elements, components, or alternatives thereof can be desirably combined into other different structures, elements, or components, while remaining within the scope of the claims below. In addition, a person having ordinary skill in the art can make various modifications, alterations, and/or improvements to the embodiments disclosed herein, and consequently embodiments in accordance with the present disclosure are limited only by the following claims.

## Claims

1. A canister mounting structure (300) for a motorcycle (10) by which canister components including an evaporative emissions canister (700) and a canister connecting tube are mounted to a motorcycle (10) having a fuel tank (70) and a fuel tray (310) comprising a tray portion (320) mounted above said fuel tank,
wherein said fuel tray (310) further comprises a canister mounting portion (400), on which said canister (700) is secured, **characterised in that**
said canister mounting structure (300) further comprises:
- a rubber holder (500) wound about said canister (700), and
said canister mounting portion (400) includes a pair of hook members (460a, 460b) integrally formed therewith and projecting upwardly therefrom, wherein said pair of hook members (460a, 460b) engages with said rubber holder (500) when said canister (700) is mounted on said fuel tray (310); and
- an upper canister holder (600) that attaches to said canister mounting portion (400) of said fuel tray (310), wherein said upper canister holder (600) and said canister mounting portion (400) securely clip said rubber holder (500) to thereby support said canister (700) on said canister mounting portion (400) of said fuel tray (310).

2. The canister mounting structure (300) of claim 1, wherein said upper canister holder (600) comprises:
a pair of holes (612a, 612b) formed to pass and engage with said hook members (460a, 460b) when said upper canister holder (600) is attached to said canister mounting portion (400); and
a purge control valve mounting portion (650) by which a purge control valve (750) is mounted to said upper canister holder (600) between said pair of holes (612a, 612b).

3. The canister mounting structure (300) of any one of claims 1 to 2, wherein:
said tray portion (320) of said fuel tray (310) surrounds a fuel cap (74), and
said canister mounting portion (400) extends rearward from said tray portion (320).

4. The canister mounting structure (300) of claim 3, further comprising a lock mechanism (900) for locking and opening a fuel lid (212) of the motorcycle (10), and said fuel tray (310) includes a covering portion (370) formed at a front portion of said tray portion (320), wherein said covering portion (370) covers at least side and lower portions of said lock mechanism (900).

5. The canister mounting structure (300) of claim 3 or 4, wherein said connecting tube comprises:
a canister charge tube (810) routed on right and left sides of said fuel tank (70), and
said fuel tray (310) further comprises:
a clip portion (360, 362a, 362b) integrally formed around said tray portion (320), which clips said canister charge tube (810) at least generally close to right and left sides of said fuel tank (70); and
a guide portion (350a, 350b) for guiding said canister charge tube (810) at the portion where said canister charge tube (810) is extending to right and left direction of said fuel tray (310).

6. The canister mounting structure (300) of claim 5, wherein said guide portion (350a, 350b) comprises:
a first guide portion (350b) disposed between said lock mechanism (900) and said fuel cap (74) of said fuel tank (70); and
a second guide portion (350a) disposed between said fuel cap (74) and said canister (700).

7. The canister mounting structure (300) of claim 6, wherein said fuel tank (70) includes:
a basement (86) mounted around a fuel filler pipe (72), and
said fuel tray (310) includes a hooking structure (420) configured for securing said fuel tray (310) to said fuel tank (70) by engagement of said hooking structure (420) with said basement (86), wherein said hooking structure (420) comprises:
a hooking portion (332) formed forward of said fuel filler pipe (72) and hanging to said basement (86); and
an abutment portion (334) positioned opposite said hooking portion (332) and against which said basement (86) abuts,
wherein said hooking structure (420) is designed at almost the same position of said first guide portion (350b) and second guide portion (350a).

8. The canister mounting structure (300) of any one of claims 1 to 7, wherein said canister mounting portion (400) includes:
a hang portion (420) formed at the rear end opposite said tray portion (320) of said fuel tray (310), wherein said hang portion (420) is secured to a body frame extending below a luggage box (60) by hanging over the body frame such that the body frame engages with and supports the hang portion (420), and wherein said hang portion (420) and said upper canister holder (600) are bound together by a pin portion (62) of said luggage box (60).

9. The canister mounting structure (300) of claim 8, wherein:
said hang portion (420) includes a first binding hole (432);
said upper canister holder (600) includes a second binding hole (632) formed at an identical position as said first binding hole (432) for alignment therewith; and
said pin portion (62) of said luggage box (60) includes a pin structure (64) inserted into said first and second binding holes (432, 632) together.

10. The canister mounting structure (300) of any one of claims 1 to 9, wherein said fuel tray (310) includes:
a set of stopper portions (450) formed on an underside of said canister mounting portion (400) and projecting toward a fixing means by which a fuel pump (76) is fixed in position in the fuel tank (70).

11. The canister mounting structure (300) of any one of claims 1 to 10, wherein a purge control valve (750) is mounted to the upper canister holder (600) that attaches to said canister mounting portion (400) of said fuel tray (310) via an upwardly projecting purge control valve mounting portion (650).

## Patentansprüche

1. Kanistermontagestruktur (300) für ein Motorrad (10), durch die Kanisterkomponenten, die einen Verdunstungsemissionskanister (700) und ein Kanisterverbindungsrohr aufweisen, an einem Motorrad (10) angebracht sind, das einen Kraftstofftank (70) und einem Kraftstoffeinsatz (13) aufweist, wobei der Einsatzbereich (320) über dem Kraftstofftank angebracht ist,
wobei der Kraftstoffeinsatz (310) weiterhin einen Kanistermontagebereich (400) aufweist, an dem der Kanister (700) befestigt ist,
**dadurch gekennzeichnet, dass**
die Kanistermontagestruktur (300) weiterhin aufweist:
- eine Gummihalterung (500), die um den Kanister (700) gewickelt ist, und
der Kanistermontagebereich (400) ein Paar von Hakenelementen (460a, 460b) aufweist, die integral damit ausgebildet sind und davon nach oben hervorstehen, wobei das Paar von Hakenelementen (460a, 460b) mit der Gummihalterung (500) eingreift, wenn der Kanister (700) am Kraftstoffeinsatz (310) angebracht ist; und
- eine obere Kanisterhalterung (600), die an dem Kanistermontagebereich (400) des Kraftstoffeinsatzs (310) befestigt ist, wobei die obere Kanisterhalterung (600) und der Kanistermontagebereich (400) die Gummihalterung (500) sicher einklemmen, um dadurch den Kanister (700) am Kanistermontagebereich (400) des Kraftstoffeinsatzes (310) zu halten.

2. Kanistermontagestruktur (300) nach Anspruch 1,
wobei die obere Kanisterhalterung (600) aufweist:
ein Paar von Öffnungen (612a, 612b), die ausgebildet sind, um hindurchzugehen und mit den Hakenelementen (460a, 460b) einzugreifen, wenn die obere Kanisterhalterung (600) am Kanistermontagebereich (400) angebracht ist; und ein Montagebereich (650) eines Spülluft-Steuerventils, über das ein Spülluft-Steuerventil (750) an der oberen Kanisterhalterung (600) zwischen dem Paar der Öffnungen (612a, 612b) angebracht ist.

3. Kanistermontagestruktur (300) nach einem der Ansprüche 1 bis 2, wobei:
der Einsatzbereich (320) des Kraftstoffeinsatzes (310) eine Kraftstoffkappe (74) umgibt, und der Kanistermontagebereich (400) vom Einsatzbereich (320) nach hinten verläuft.

4. Kanistermontagestruktur (300) nach Anspruch 3, die weiterhin einen Sperrmechanismus (900) aufweist, um einen Kraftstoffdeckel (212) des Motorrads (10) zu versperren und zu öffnen, und der Kraftstoffeinsatz (310) einen Abdeckungsbereich (370) aufweist, der an einem vorderen Bereich des Einsatzbereichs (320) ausgebildet ist, wobei der Abdeckungsbereich (370) wenigstens seitliche und untere Bereiche des Sperrmechanismus (900) abdeckt.

5. Kanistermontagestruktur (300) nach Anspruch 3 oder 4,
wobei das Verbindungsrohr aufweist:
ein Kanisterauslassrohr (810), das an der linken und rechten Seite des Kraftstofftanks (70) verlegt ist, und
wobei der Kraftstoffeinsatz (310) weiterhin aufweist:
einen Clipbereich (360, 362a, 362b), der integral um den Einsatzbereich (320) ausgebildet ist, der das Kanisterauslassrohr (810) wenigstens im Allgemeinen nahe der rechten und linken Seite des Kraftstofftanks (70) anklemmt; und
einen Führungsbereich (350a, 350b), um das Kanisterauslassrohr (810) an dem Bereich zu führen, an dem das Kanisterauslassrohr (810) in die linke und rechte Richtung des Kraftstoffeinsatzs (310) verläuft.

6. Kanistermontagestruktur (300) nach Anspruch 5,
wobei der Führungsbereich (350a, 350b) aufweist:
einen ersten Führungsbereich (350b), der zwischen dem Sperrmechanismus (900) und der Treibstoffkappe (74) des Treibstofftanks (70) angeordnet ist; und
einen zweiten Führungsbereich (350a), der zwischen der Treibstoffkoppe (74) und dem Kanister (700) angeordnet ist.

7. Kanistermontagestruktur (300) nach Anspruch 6, wobei der Kraftstofftank (70) aufweist:
einen Boden (86), der um ein Kraftstofffüllrohr (72) angebracht ist, und
wobei der Kraftstoffeinsatz (310) eine Hakenstruktur (420) aufweist, die ausgestaltet ist, um den Kraftstoffeinsatz (310) am Kraftstofftank (70) durch Eingriff der Hakenstruktur (420) in dem Boden (86) zu befestigen, wobei die Hakenstruktur (420) aufweist:
ein Hakenbereich (332), der vorderhalb des Kraftstofffüllrohrs (72) ausgebildet ist und am Boden (86) einhängt; und
einen Auflagebereich (334), der gegenüberliegend zum Hakenbereich (332) angeordnet ist und gegen den der Boden (86) anliegt,
wobei die Hakenstruktur (420) an nahezu der gleichen Position des ersten Führungsbereichs (350b) und des zweiten Führungsbereichs (350a) ausgebildet ist.

8. Kanistermontagestruktur (300) nach einem der Ansprüche 1 bis 7,
wobei der Kanistermontagebereich (400) aufweist:
einen Hängebereich (420), der am hinteren Ende gegenüberliegend zum Einsatzbereich (320) des Treibstoffeinsatzes (310) ausgebildet ist, wobei der Hängebereich (420) an einem Karosserierahmen befestigt ist, der unterhalb eines Gepäckbehälters (60) verläuft, indem er dergestalt über den Karosserierahmen hängt, dass der Karosserierahmen mit dem Hängebereich (420) eingreift und ihn hält, und wobei der Hängebereich (420) und die obere Kanisterhalterung (600) durch einen Stiftbereich (62) des Gepäckbehälters (60) miteinander verbunden sind.

9. Kanistermontagestruktur (300) nach Anspruch 8, wobei:
der Hängebereich (40) eine erste Verbindungsöffnung (432) aufweist;
die obere Kanisterhalterung (600) eine zweite Verbindungsöffnung (632) aufweist, die an einer identischen Position wie die erste Verbindungsöffnung (432) zur Ausrichtung damit ausgebildet ist; und
der Stiftbereich (62) des Gepäcksbehälters (60) eine Stiftstruktur (64) aufweist, die in die erste und zweite Verbindungsöffnung (432, 632) zusammen eingesetzt ist.

10. Kanistermontagestruktur (300) nach einem der Ansprüche 1 bis 9,
wobei der Kraftstoffeinsatz (310) aufweist:
eine Gruppe von Stoppbereichen (450), die an einer Unterseite des Kanistermontagebereichs (400) ausgebildet sind und in Richtung eines Fixierungsmittels hervorstehen, durch das eine Kraftstoffpumpe (76) im Kraftstofftank (70) in der Position fixiert wird.

11. Kanistermontagestruktur (300) nach einem der Ansprüche 1 bis 10, wobei ein Spülluft-Steuerventil (750) an der oberen Kanisterhalterung (600) angebracht ist, die am Kanistermontagebereich (400) des Kraftstoffeinsatzes (310) über einen nach oben hervorstehenden Anbringungsbereich (56) des Spülluft-Steuerventils festgemacht ist.

## Revendications

1. Structure de montage de réservoir (300) pour une moto (10) grâce à laquelle des composants de réservoir comportant un réservoir de vapeurs de carburant (700) et un tube de raccordement de réservoir sont montés sur une moto (10) ayant un réservoir de carburant (70) et un plateau à carburant (310) comprenant une portion de plateau (320) montée au-dessus dudit réservoir de carburant,
dans laquelle ledit plateau à carburant (310) comprend en outre une portion de montage de réservoir (400), sur laquelle ledit réservoir (700) est assujetti,
**caractérisée en ce que**
ladite structure de montage de réservoir (300) comprend en outre :
- un support en caoutchouc (500) enroulé autour dudit réservoir (700), et
ladite portion de montage de réservoir (400) comporte une paire d'organes crochets (460a, 460b) formés d'un seul tenant avec celle-ci et saillant vers le haut depuis celle-ci, dans laquelle ladite paire d'organes crochets (460a, 460b) s'enclenche avec ledit support en caoutchouc (500) lorsque ledit réservoir (700) est monté sur ledit plateau à carburant (310) ; et
- un support de réservoir supérieur (600) qui s'attache à ladite portion de montage de réservoir (400) dudit plateau à carburant (310), dans laquelle ledit support de réservoir supérieur (600) et ladite portion de montage de réservoir (400) pincent à demeure ledit support en caoutchouc (500) pour supporter ainsi ledit réservoir (700) sur ladite portion de montage de réservoir (400) dudit plateau à carburant (310).

2. Structure de montage de réservoir (300) selon la revendication 1, dans laquelle ledit support de réservoir supérieur (600) comprend :
une paire de trous (612a, 612b) formés pour faire passer et s'enclencher avec lesdits organes crochets (460a, 460b) lorsque ledit support de réservoir supérieur (600) est attaché à ladite portion de montage de réservoir (400) ; et
une portion de montage de vanne de commande de purge (650) grâce à laquelle une vanne de commande de purge (750) est montée sur ledit support de réservoir supérieur (600) entre ladite paire de trous (612a, 612b).

3. Structure de montage de réservoir (300) selon l'une quelconque des revendications 1 et 2, dans laquelle :
ladite portion de plateau (320) dudit plateau à carburant (310) entoure un bouchon de carburant (74), et
ladite portion de montage de réservoir (400) s'étend vers l'arrière depuis ladite portion de plateau (320).

4. Structure de montage de réservoir (300) selon la revendication 3, comprenant en outre un mécanisme de verrou (900) pour verrouiller et ouvrir un couvercle de carburant (212) de la moto (10), et ledit plateau à carburant (310) comporte une portion couvrante (370) formée au niveau d'une portion avant de ladite portion de plateau (320), dans laquelle ladite portion couvrante (370) couvre au moins des portions de côté et inférieure dudit mécanisme de verrou (900).

5. Structure de montage de réservoir (300) selon la revendication 3 ou 4, dans laquelle ledit tube de raccordement comprend :
un tube de chargement de réservoir (810) dirigé sur des côtés droit et gauche dudit réservoir de carburant (70), et
ledit plateau à carburant (310) comprend en outre :
une portion de pince (360, 362a, 362b) formée d'un seul tenant autour de ladite portion de plateau (320), qui pince ledit tube de chargement de réservoir (810) au moins généralement près des côtés droit et gauche dudit réservoir de carburant (70) ; et
une portion de guidage (350a, 350b) pour guider ledit tube de chargement de réservoir (810) au niveau de la portion où ledit tube de chargement de réservoir (810) s'étend vers la direction droite et gauche dudit plateau à carburant (310).

6. Structure de montage de réservoir (300) selon la revendication 5, dans laquelle ladite portion de guidage (350a, 350b) comprend :
une première portion de guidage (350b) disposée entre ledit mécanisme de verrou (900) et ledit bouchon de carburant (74) dudit réservoir de carburant (70) ; et
une seconde portion de guidage (350a) disposée entre ledit bouchon de carburant (74) et ledit réservoir (700).

7. Structure de montage de réservoir (300) selon la revendication 6, dans laquelle ledit réservoir de carburant (70) comporte :
une base (86) montée autour d'une conduite de remplissage de carburant (72), et
ledit plateau à carburant (310) comporte une structure d'accrochage (420) configurée pour assujettir ledit plateau à carburant (310) sur ledit réservoir de carburant (70) par un enclenchement de ladite structure d'accrochage (420) avec ladite base (86), dans laquelle ladite structure d'accrochage (420) comprend :
une portion d'accrochage (332) formée vers l'avant de ladite conduite de remplissage de carburant (72) et suspendue à ladite base (86) ; et
une portion de butée (334) positionnée opposée à ladite portion d'accrochage (332) et contre laquelle ladite base (86) bute,
dans laquelle ladite structure d'accrochage (420) est conçue quasiment à la même position que ladite première portion de guidage (350b) et ladite seconde portion de guidage (350a).

8. Structure de montage de réservoir (300) selon l'une quelconque des revendications 1 à 7, dans laquelle ladite portion de montage de réservoir (400) comporte :
une portion de suspension (420) formée au niveau de l'extrémité arrière opposée à ladite portion de plateau (320) dudit plateau à carburant (310), dans laquelle ladite portion de suspension (420) est assujettie à un cadre de caisse s'étendant en dessous d'un coffre à bagages (60) en étant suspendu sur le cadre de caisse de sorte que le cadre de caisse s'enclenche avec et supporte la portion de suspension (420), et dans laquelle ladite portion de suspension (420) et ledit support de réservoir supérieur (600) sont liés ensemble par une portion de goupille (62) dudit coffre à bagages (60).

9. Structure de montage de réservoir (300) selon la revendication 8, dans laquelle :
ladite portion de suspension (420) comporte un premier trou de liaison (432) ;
ledit support de réservoir supérieur (600) comporte un second trou de liaison (632) formé à une position identique audit premier trou de liaison (432) pour un alignement sur celui-ci ; et
ladite portion de goupille (62) dudit coffre à bagages (60) comporte une structure de goupille (64) insérée dans lesdits premier et second trous de liaison (432, 632) ensemble.

10. Structure de montage de réservoir (300) selon l'une quelconque des revendications 1 à 9, dans laquelle ledit plateau à carburant (310) comporte :
un ensemble de portions d'arrêtoir (450) formé sur une sous-face de ladite portion de montage de réservoir (400) et faisant saillie vers un moyen de fixation grâce auquel une pompe à carburant (76) est fixée en position dans le réservoir de carburant (70).

11. Structure de montage de réservoir (300) selon l'une quelconque des revendications 1 à 10, dans laquelle une vanne de commande de purge (750) est montée sur le support de réservoir supérieur (600) qui s'attache à ladite portion de montage de réservoir (400) dudit plateau à carburant (310) via une portion de montage de vanne de commande de purge faisant saillie vers le haut (650).
